(19) Europäisches Patentamt
European Patent Office
Office européen des brevets

(11) Veröffentlichungsnummer: **0 213 401 B1**

# (12) EUROPÄISCHE PATENTSCHRIFT

(45) Veröffentlichungstag der Patentschrift: **08.05.91**

(51) Int. Cl.5: **C08F 10/10**, C08F 4/14, C08F 2/00

(21) Anmeldenummer: **86110542.7**

(22) Anmeldetag: **30.07.86**

## (54) Verfahren zur Polymerisation von Isobutylen.

(30) Priorität: **01.08.85 DE 3527551**

(43) Veröffentlichungstag der Anmeldung:
**11.03.87 Patentblatt 87/11**

(45) Bekanntmachung des Hinweises auf die Patenterteilung:
**08.05.91 Patentblatt 91/19**

(84) Benannte Vertragsstaaten:
**AT BE DE FR GB NL**

(56) Entgegenhaltungen:
**EP-A- 0 025 530**
**FR-A- 1 447 837**
**FR-A- 2 147 263**

(73) Patentinhaber: **BASF Aktiengesellschaft**
**Carl-Bosch-Strasse 38**
**W-6700 Ludwigshafen(DE)**

(72) Erfinder: **Schick, Hans, Dr.**
**Am Aubuckel 30**
**W-6800 Mannheim 51(DE)**
Erfinder: **Kolk, Erich, Dr.**
**Im Rustengut 14**
**W-6702 Bad Duerkheim(DE)**
Erfinder: **Fauth, Karl-Heinz**
**Haardtblick 7**
**W-6719 Wattenheim(DE)**
Erfinder: **Mohr, Heinrich, Dr.**
**Carostr. 41**
**W-6710 Frankenthal(DE)**

EP 0 213 401 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Umsatzsteigerung bei der Herstellung von Polyisobutylen durch Polymerisation von Isobutylen in einer Polymerisationszone, in der eine Temperatur zwischen 0 und -130° C herrscht, in Gegenwart, jeweils bezogen auf das eingesetzte Isobutylen, von 0,01 bis 1,0 Gew.-% Bortrifluoridkatalysator, der weniger als 0,3 Vol.-% an Fremdbestandteilen enthält, 0,001 bis 1,0 Gew.-% eines Molekulargewichtsreglers, 30 bis 90 Gew.-% eines unter Reaktionsbedingungen inerten, niedrigsiedenden Lösungsmittels und - gegebenenfalls-Polymerisationsbeschleuniger in üblichen Mengen, wobei das bei der Polymerisation verdampfte Lösungsmittel kontinuierlich abgezogen, verflüssigt und im flüssigen Zustand erneut der Polymerisationszone zugefügt wird.

Bei derartigen Polymerisationsverfahren ist es erforderlich, in Gegenwart von Katalysatoren und Molekulargewichtsreglern sowie ggf. in Gegenwart von Polymerisationsbeschleunigern zu arbeiten, wobei letztere außer einer Erhöhung des Molekulargewichts des entstehenden Polymerisats eine Beschleunigung des Reaktionsablaufs und eine Verringerung der Katalysatormenge bewirken soll. Es ist ferner von technischem Interesse, die Polymerisation des Isobutylens bei festgelegten niedrigen Temperaturen durchzuführen, wo Vernetzungs- und Nebenreaktionen nicht vorhanden sind und gleichzeitig die Polymerisationswärme des Isobutylens abzuführen.

Es ist bekannt, die Polymerisation des Isobutylens bzw. Isobutens zwischen 0 und -130° C mit Friedel-Crafts-Verbindungen in Gegenwart von Molekulargewichtsreglern zu katalysieren und zur Beschleunigung der Reaktion in Anwesenheit von 10 bzw. 5000 Gew.-ppm, bezogen auf das Isobutylen, eines Polymerisationsbeschleunigers zu arbeiten und zur Abführung der Reaktionswärme in Gegenwart eines niedrigsiedenden inerten Lösungsmittels, das unter Reaktionsbedingungen verdampft, zu polymerisieren (vgl. US-Patente 3 129 205, 2 906 798, 4 391 959, EP-A1-154164, DE-Patent 10 99 171 und EP-B1-25530). Bei den bekannten Verfahren wird das verdampfte Lösungsmittel in einem Kompressor verdichtet und in den Polymerisationsprozeß zurückgeführt.

Es hat sich nun gezeigt, daß Verunreinigungen im Isobutylen den Polymerisationsablauf empfindlich stören können. Aufgrund der physikalischen Daten (Kp 760 mm - 6,9° C, Fp: -140° C) und der Herstellungsbedingungen enthält Isobutylen viele Verunreinigungen im Bereich von $C_2$- bis $C_7$-Kohlenwasserstoffen. Besonders im Bereich der $C_4$-Kohlenwasserstoffe gibt es eine größere Anzahl polymerisationsaktiver Komponente, die über eine sorgfältige Druckdestillation abgetrennt werden müssen.

Während man für die Herstellung von niedermolekularen Polyisobutylenen $C_4$-Kohlenwasserstoff-Fraktionen verwenden kann, die neben Isobutylen noch n-Butan, Isobutan und n-Butene enthalten, werden an das Isobutylen für die Herstellung hochmolekularer und festen Polyisobutylene höhere Anforderungen gestellt. Das aus Isobutanol gewonnene und mit Normalbutenen, Isobutyraldehyd und Isobutyräther verunreinigte Spaltisobutylen (Reinheit ca. 88 - 99,8 Vol.-%) wird hierzu einer sorgfältigen Destillation unterworfen. Nach der fraktionierten Destillation steht zwar ein hochwertiges Isobutylen zur Verfügung, das aber noch eine Reihe schwer abtrennbarer Störkomponenten enthält (Butadien-1.3, Propen, Isobutan, Buten-1). Die Konzentration der einzelnen Störkomponenten ist vom Spaltergebnis abhängig und kann deshalb nicht von vornherein spezifiziert oder definiert werden.

Bei der Isolierung von Isobutylen aus $C_4$-Kohlenwasserstoffschnitten über Veretherung mit Methanol (MTBE) oder Isobutanol (IBTBE) und nachfolgender Spaltstufe des betreffenden Ethers entsteht ein Budimatisobutylen (Reinheit 99,98 - 99 Vol.-%), das fast frei von vorgenannten Störkomponenten ist. Während die Konzentration der für die Isobutylenpolymerisation störenden Komponenten im Spaltisobutylen zwischen 0,2 - 12 Vol.-% liegen kann, ist bei Budimatisobutylen diese Konzentration auf < 2000 Vol.-ppm begrenzt.

Es hat sich nun gezeigt, daß das im Kreis geführte Lösungsmittel sowohl bei Verwendung von Spaltisobutylen als auch beim Einsatz von Budimatisobutylen nach kurzer Zeit eine so hohe Konzentration an Fremdstoffen, welche die Reglerwirkung stören und eine Erhöhung der Polymerisationszeit und des Katalysatorverbrauchs verursachen, mit sich führt, daß die Kreisgasleitungen sich mit nieder- bis mittelmolekularen Polyisobutylenen belegen und damit eine kontinuierliche Fahrweise verhindern.

Der Erfindung liegt die Aufgabe zugrunde, ein Verfahren aufzufinden, bei dem obenerwähnte Nachteile nicht auftreten und eine Umsatzsteigerung erreicht werden kann.

Diese Aufgabe wird erfindungsgemäß durch Verfahren gemäß Patentansprüche 1 bis 3 gelöst.

Verfahren zur Herstellung von Polyisobutylen durch Polymerisation von Isobutylen in einer Polymerisationszone sind seit geraumer Zeit bekannt und werden in der Monographie von H. Güterbock "Chemische Technologie der Kunststoffe in Einzeldarstellungen, Polyisobutylen", 1959, Seiten 77 bis 105, Springer-Verlag, Berlin/Göttingen/Heidelberg ausführlich beschrieben. Die erhaltenen Polyisobutylene sind bei Raumtemperatur, je nach Molekulargewicht, viskos-ölig bis gummielastisch, haben eine Dichte von 0,83 bis 0,93

g/cm³ und weisen die Formel:

$$-(CH_2-\overset{\displaystyle CH_3}{\underset{\displaystyle CH_3}{\overset{|}{\underset{|}{C}}}})-_n$$

auf, wobei n = 2 bis 80.000.

Die Polymerisation des Isobutylens erfolgt nach bekanntem Verfahren bei Reaktionstemperaturen zwischen 0 und -160° C, vorzugsweise arbeitet man bei Temperaturen zwischen -50° C und -110° C. Das Verfahren arbeitet drucklos.

Für das bekannte Verfahren verwendet man in erster Linie Bortrifluorid als Friedel-Crafts-Katalysator in üblichen Mengen von 0,01 bis 1,0 Gewichtsprozent, bezogen auf das eingesetzte Isobutylen. Um bei einer gegebenen Temperatur das Molekulargewicht des Polyisobutylens gezielt einstellen zu können, bedient man sich gegebenenfalls der sogenannten Molekulargewichtsregler in üblichen Mengen von von 1 bis 5000 Gew.-ppm, bezogen auf das eingesetzte Isobutylen. Derartige Molekulargewichtsregler sind beispielsweise die Verbindungen Diisobutylen, Mercaptane, Sulfide oder Polysulfide. Neben einer Erniedrigung des Molekulargewichts der entstehenden Isobutylenpolymerisate bewirken die Molekulargewichtsregler eine beträchtliche Erhöhung der Reaktionszeit und erfordern häufig auch eine Erhöhung des Katalysatorbedarfs.

Die Polymerisation des Isobutylens wird in Gegenwart von 10 bis 5000 Gew.-ppm, bezogen auf das eingesetzte Isobutylen, eines Polymerisationsbeschleunigers durchgeführt. Diese Substanzen bewirken eine Beschleunigung des Reaktionsablaufs und eine Verringerung der erforderlichen Katalysatormenge. Als Folge dieser Zusätze entstehen außerdem hochmolekulare Polyisobutylene, da kettenabbrechende Einflüsse weniger wirksam werden. Es handelt sich hierbei vorzugsweise um primäre oder sekundäre Alkohole mit 1 bis 10 Kohlenstoffatomen, beispielsweise um Methanol, Äthanol, n-Propanol, iso-Propanol, n-Butanol, iso-Butanol, Amylalkohole, Cyclohexanol und Benzylalkohol. In Betracht kommen außerdem Phenole, Carbonsäuren oder Mineralsäuren.

Die Polymerisation des Isobutylens wird in Gegenwart von 30 bis 90 Gew.-%, bezogen auf das eingesetzte Isobutylen, eines unter Reaktionsbedingungen inerten, niedrigsiedenden Lösungsmittels vorgenommen. Wegen der günstigen Lage ihrer Siedepunkte geeignete Lösungsmittel sind bevorzugt Methan, Äthan, Propan und besonders Ethylen, da durch Verdampfen derselben unter Reaktionsbedingungen die Polymerisationswärme des Isobutylens auf einfache Weise abgeführt werden kann. Bei Verwendung der obengenannten Lösungsmittel, die gleichzeitig Kühlmittel sind, z.B. beim Einsatz von Ethylen, wird das Isobutylen bei Siedetemperatur des inerten Lösungsmitels polymerisiert. Im Falle des Ethylens beträgt die Polymerisationstemperatur -104° C.

Nach bekannten Verfahren wird das bei der Polymerisation verdampfte Lösungsmittel kontinuierlich abgezogen, verflüssigt und in flüssigem Zustand erneut der Polymerisationszone zugeführt.

Nach erfindungsgemäßem Verfahren wird in dem zu Polymerisation gelangenden monomeren Isobutylen ein Gehalt von 1,9 bis 2,1, bevorzugt 2,0 Gew.-%, von Buten-1 konstant gehalten. Das Buten-1 ist in hoher Reinheit (99,3 Gew.-% Buten-1, 0,2 Gew.-% Isobuten, 0,4 Gew.-% Butan) auf dem Markt erhältlich und wird in dieser Form verwendet. Nach bevorzugter Verfahrensweise soll das Buten-1 in der Summe weniger als 50 Gew.-ppm cis-Buten-2 und trans-Buten-2 enthalten. Die cis- und trans-Isomere des Butens-2 müssen durch eine Druckdestillation sorgfältig abgetrennt und eine Trocknung mit Chlorcalcium durchgeführt werden. Das Buten-1 kann dem Isobutylen volumetrisch zugefügt werden. Wenn aufgrund der Herstellungsbedingungen schon gewisse Buten-1-Konzentrationen vorhanden sein sollten, ist entweder durch Zugabe von Buten-1 oder durch Zugabe von Reinstisobuten der Gehalt von Buten-1 auf 1,9 bis 2,1 bevorzugt 2,0 Gew.%, einzustellen.

Die mit der Erfindung erzielten Vorteile sind insbesondere darin zu sehen, daß das Konstanthalten von ca. 2 Gew.-% der Reinsubstanz Buten-1 im Isobutylen das Polymerisationsverhalten des Isobutylen, wie Umsatzsteigerung, ruhiger Polymerisationsverlauf, reduzierte Katalysator- und Reglerkonzentration, verbessert.

Das erfindungsgemäße Verfahren wird anhand der folgenden Beispiele näher erläutert. Die in den Beispielen angegebenen Molekulargewichte wurden nach Staudinger aus Viskositätsmessungen an verdünnten Polymerlösungen ermittelt. Um den Stand der Technik zu zeigen, wurde ein Spaltisobutylen mit variablem Buten-1-Gehalt und ein Budimatisobutylen mit 0,05 Gew.-% Buten-1 benutzt.

Für die Herstellung des Isobutylens wurden die nachfolgend beschriebenen Versuche durchgeführt:

Es ist bekannt, aus primären, sekundären und tertiären Alkoholen durch Überleiten der Alkoholdämpfe über Katalysatoren bei Temperaturen von 300° bis 450° C Wasser abzuspalten und auf diese Weise Olefine herzustellen. Als Katalysatoren verwendet man $\gamma$-Aluminiumoxide (vgl. Houben-Weyl, Methoden der organischen Chemie, Bd. IV, Teile 2 [1955], Seite 210). Die Dehydratisierungsprodukte sind in nachfolgender Tabelle zusammengefaßt und zeigen je nach Ausgangsstoff und Katalysator unterschiedliche Buten-1-Gehalte.

| Versuch | Ausgangsstoff | Katalysator | Dehydratisierungsprodukte in Gew.-% | | | |
|---|---|---|---|---|---|---|
| | | | Isobutylen | Buten-1 | cis-, trans-Buten-2 | Fremdgas |
| | n-Butanol | $\gamma$-$Al_2O_3$ aus Böhmit | 5 | 58 | 35 | 2 |
| 1 | i-Butanol | | 89,7 | 3,2 | 6,4 | 0,7 |
| | t-Butanol | | - | - | - | - |
| | n-Butanol | $\gamma$-$Al_2O_3$ aus Bayerit | 2 | 83 | 14 | 1 |
| 2 | i-Butanol | | 96,2 | 1,4 | 2,0 | 0,4 |
| 3 | t-Butanol | | 98,5 | 0,5 | 0,9 | 0,1 |
| | n-Butanol | $\gamma$-plus $\eta$-$Al_2O_3$ | 5 | 82 | 13 | 1 |
| | i-Butanol | | 97,0 | 1,2 | 1,5 | 0,3 |
| 4 | t-Butanol | | 99,8 | $< 0,1$ | $< 0,05$ | Rest |

Die Arbeitstemperatur betrug jeweils etwa 310° C.

Die in Versuch 1, 2, 3 und 4 erhaltenen Isobutylene wurden wie folgt untersucht:

A) Polymerisationslösung

Unter Ausschluß von Feuchtigkeit mischt man bei einer Temperatur von -7° C 12 g reines, getrocknetes, flüssiges Isobutylen gemäß Versuch 1 (bzw. 2, 3 + 4) mit 1000 Gew.-ppm Isobutanol, bezogen auf das eingesetzte Isobutylen und 23 g reines, getrocknetes, flüssiges Ethen von -104° C.

B) Katalysatorlösung

100 mg Bortrifluorid (Reinheit größer als 99,7 Vol.-%) werden in 23 g reinem, getrocknetem, flüssigen Ethen von -104° C gelöst.

Die Katalysatorlösung wird der Polymerisationslösung zuaddiert. Die Reaktion verläuft unter Aufsieden und Verdampfen des Ethens und ist nach den in der Tabelle angegebenen Reaktionszeiten beendet.

| Buten-1-Gehalt Gew.-% | Reaktionszeit in s | Molekulargewicht x 1000 | Umsatz in % |
|---|---|---|---|
| 3,2 (Versuch 1) | 15 | 265 | 92,5 |
| 1,4 (Versuch 2) | 14 | 277 | 97,6 |
| 0,5 (Versuch 3) | 11 | 275 | 97,5 |
| < 0,1 (Versuch 4) | 10 | 274 | 97,4 |

Beispiel und Vergleichsbeispiele

Dem Isobutylen aus Versuch 4 werden die in der Tabelle angegebenen Buten-1-Konzentrationen addiert und wie oben beschrieben untersucht. Das Buten-1 hat folgende Reinheit: 99,7 Gew.-% Buten-1, 0,2 Gew.-% Butan (n- und Isobutan), Summe von cis- und trans-Buten-2 50 Gew.-ppm, Rest Isobutylen.

| Buten-1 Gew.-% | Inkubationszeit in s | Reaktionszeit in s | Molgewicht x 1000 | Standardabweichung ± s x 1000 | Umsatz in Gew.-% auf Isobutylen bezogen |
|---|---|---|---|---|---|
| <0,1 | 0,5 | 10 | 274 | 20 | 97,4 |
| 0,5 | 1,0 | 11 | 275 | 15 | 97,5 |
| 1,0 | 1,0 | 12 | 276 | 10 | 97,5 |
| 1,5 | 1,5 | 14 | 280 | 5 | 97,7 |
| *2,0 | 2 | 16 | 286 | 1 | 98,9 |
| 2,5 | 2 | 22 | 268 | 10 | 92,6 |
| 5 | 2 | 28 | 220 | 20 | 87,8 |

* Erfindung

Die Mischung: 98 Gew.-% Reinstisobutylen (99,99 Gew.-% Isobutylen, < 100 Gew.-ppm Butan, < 50 Gew.-ppm cis- und trans-Buten-2) und 2 Gew.-% n-Buten-1 stellt die optimalste Bedingung dar.

Während bei der Dehydratisierung von Isobutanol ein Isobutylen - je nach Verfahrensbedingungen - mit variablem Buten-1-Gehalt anfällt, entsteht bei der Dehadratisierung von Tertiärbutylalkohol ein Reinstisobutylen (99,99 Gew.-% Reinheit) mit geringstem Buten-1 Gehalt. Eine Destillation kann das Buten-1 von Isobutylen nicht abtrennen, da die Siedepunkte zu nahe beieinander liegen (Kp von Isobutylen -6,9 °C; Kp von Buten-1 -6, 26 °C). Für eine störungsfreie Isobutylenpolymerisation zur Erzielung hochmolekularer Polyisobutylene ist aber ein Isobutylen mit konstantem Buten-1-Gehalt von 1,9 bis 2,1, insbesondere 2,0 Gew.% erforderlich.

## Ansprüche

1. Verfahren zur Umsatzsteigerung bei der Herstellung von Polyisobutylen durch Polymerisation von Isobutylen in einer Polymerisationszone, in der eine Temperatur zwischen 0 und -130 °C herrscht, in Gegenwart, jeweils bezogen auf das eingesetzte Isobutylen, von 0,01 bis 1,0 Gew.-% Bortrifluoridkatalysator, der weniger als 0,3 Vol.-% an Fremdbestandteilen enthält, 0,001 bis 1,0 Gew.-% eines Molekulargewichtsreglers, 30 bis 90 Gew.-% eines unter Reaktionsbedingungen inerten, niedrigsiedenden Lösungsmittels und ggf. Polymerisationsbeschleuniger in üblichen Mengen, wobei das bei der Polymerisation verdampfte Lösungsmittel kontinuierlich abgezogen, verflüssigt und im flüssigen Zustand erneut der Polymerisationszone zugefügt wird, dadurch gekennzeichnet, daß im monomeren Isobutylen ein Buten-1-Gehalt von 1,9 bis 2,1 Gew.-%, bezogen auf das Isobutylen, konstant gehalten wird.

2. Verfahren nach Anspruch 1, dadurch gekennzeichnet, daß ein Buten-1-Gehalt von 2,0 Gew.% aufrechterhalten wird.

3. Verfahren nach Anspruch 1, dadurch gekennzeichnet, daß das Buten-1 in der Summe weniger als 50 Gew.-ppm cis-Buten-2 und trans-Buten-2 enthält.

## Claims

1. A process for increasing the conversion in the preparation of polyisobutylene by polymerization of isobutylene in a polymerization zone in which the temperature is maintained at from 0 to -130° C, in the presence of from 0.01 to 1.0% by weight of a boron trifluoride catalyst which contains less than 0.3% by volume of foreign components, from 0.001 to 1.0% by weight of a molecular weight regulator and from 30 to 90% by weight of a low-boiling solvent which is inert under the reaction conditions, the percentages by weight in each case being based on the isobutylene employed, and, if required, a conventional amount of a polymerization accelerator, the solvent vaporized during the polymerization being removed continuously, liquefied and recycled in the liquid state to the polymerization zone, wherein the content of but-1-ene in the monomeric isobutylene is kept constant at from 1.9 to 2.1% by weight, based on the isobutylene.

2. A process as claimed in claim 1, wherein a but-1-ene content of 2.0% by weight is maintained.

3. A process as claimed in claim 1, wherein the but-1-ene contains less than 50 ppm by weight of cis-but-2-ene and trans-but-2-ene together.

## Revendications

1. Procédé pour élever le degré de transformation dans la fabrication de polyisobutylène par polymérisation d'isobutylène dans une zone de polymérisation dans laquelle règne une température comprise entre 0 et -130° C, en présence - chaque fois par rapport à l'isobutylène mis en réaction - de 0,01 à 1,0% en poids de catalyseur à base de trifluorure de bore qui contient moins de 0,3% en volume de constituants étrangers, de 0,001 à 1.0% en poids d'un régulateur de poids moléculaire, de 30 à 90% en poids d'un solvant de bas point d'ébullition inerte dans les conditions de la réaction, et éventuellement d'accélérateurs de polymérisation dans les quantités usuelles, le solvant évaporé au cours de la polymérisation étant extrait en permanence, liquéfié et renvoyé à l'état liquide dans la zone de polymérisation, caractérisé en ce qu'une teneur en butène-1 de 1,9 à 2,1% en poids, par rapport à l'isobutylène, est maintenue constamment dans l'isobutylène monomère.

2. Procédé selon la revendication 1, caractérisé en ce qu'une teneur en butène-1 de 2,0% en poids est maintenue.

3. Procédé selon la revendication 1, caractérisé en ce que le butène-1 contient au total mains de 50 ppm en poids de cis-butène-2 et de trans-butène-2.